# EUROPÄISCHE PATENTSCHRIFT

(11) **EP 1 225 348 B1**
(45) Veröffentlichungstag und Bekanntmachung des Hinweises auf die Patenterteilung: **09.03.2005**
(21) Anmeldenummer: 01128810.7
(22) Anmeldetag: 04.12.2001
(51) Int. Cl.: F16C 9/04

(54) **Werkstoffverbund-Bauteil mit einer Bruchfläche sowie Verfahren zur Vorbereitung einer Bruchtrennstelle**
Component of composite material with a fractured surface and method of preparing a point of fracture
Elément d'un materiau composite avec une surface de rupture et procédé pour préparer un point de rupture

(30) Priorität: 20.01.2001 DE 10102641
(43) Veröffentlichungstag der Anmeldung: 24.07.2002
(73) Patentinhaber: Bayerische Motoren Werke Aktiengesellschaft, 80809 München (DE)
(72) Erfinder: Luchner, Clemens, 83236 Übersee (DE); Tipkemper, Ulf, Dr., 80801 München (DE); Mittrach, Jürgen, 85622 Feldkirchen (DE); Pöllath, Helmut, 82223 Eichenau (DE)

(56) Entgegenhaltungen:
- EP-A- 0 432 915
- EP-A- 1 143 158
- DE-A- 4 303 592
- DE-A- 19 751 640
- GB-A- 2 320 308

## Beschreibung

Die Erfindung betrifft ein aus einem Werkstoffverbund gebildetes Bauteil das zumindest abschnittsweise von einer Bruchfläche begrenzt ist. Weiterhin betrifft die Erfindung ein Verfahren zur Vorbereitung einer in ihrem Verlauf weitgehend vorbestimmten Bruchtrennstelle in einem Bauteil.

Durch Bruchtrennung ist es möglich, im wesentlichen ohne Werkstoffabtrag eine Trennstelle in einem Werkstück zu bilden. Die durch Bruchtrennung vereinzelten Bauteile weisen im wesentlichen zueinander komplementäre bruchrauhe Trennflächen auf. Über diese Trennflächen können die vereinzelten Teile nahezu spaltfrei, mit hoher Positionsgenauigkeit sowie hohem Querkraftübertragungsvermögen lösbar zusammengefügt werden. Im Hinblick auf diese Merkmale eignen sich Bruchtrennverfahren insbesondere für die Fertigung hochbelasteter Gleitlageranordnungen mit geteiltem Lagersitz - beispielsweise Pleul- oder Kurbelwellenlageranordnungen.

Aus DE 43 03 592 A1 ist ein Verfahren zur Herstellung eines Pleuls bekannt. Gemäß diesem Verfahren wird an der Innenumfangsfläche einer Kurbelzapfenbohrung eines Pleuls eine Gleitlagerschicht durch ein thermisches Spritzverfahren erzeugt. Diese Gleitlagerschicht wird im Bereich einer Lagerdeckel-Anschlußfläche durch Bruchtrennung getrennt.

Ferner ist mit der DE 197 51 640 A1 ein geschmiedetes Pleuel für Hubkolbenmaschinen aus Kohlenstoffstahl mit bruchgetrenntem Lagerdeckel offenbart, bei welchem zur gezielten Bruchauslösung am großen Lagerauge für den Lagerdeckel eine Anrißstelle erzeugt ist durch zumindest abschnittsweise entlang einer Seite der Bruchtrennebene von der Bauteiloberfläche aus angeordneter und mittels querschnittsschwacher Stege voneinander getrennter, insbesondere sacklochartiger Vertiefungen, wobei diese Stege zumindest in ihrem freien, bauteiloberflächennahen Endabschnitten mittels temperaturabhängiger Gefügeumwandlungen zu Martensit über ihren Querschnitt durchgängig versprödet sind zur Erzeugung insbesondere von Härterissen als erste Starterrisse zur Bruchauslösung.

Das Pleuel gemäß der DE 197 51 640 A1 weist keine(n) vor dem Bruchtrennen oder der Vorbereitung zum Bruchtrennen aufgebrachte(n) lagerseitige Beschichtung/Lagereinsatz auf. Die Ausbildung Versprödung der Stege basiert ausschließlich auf dem Pleuelwerkstoff selbst.

Die bekannten Bruchtrennverfahren erfordern eine vergleichsweise hohe Steifigkeit des zu trennenden Werkstückes. Aufgrund der zur Einleitung des Bruchvorganges erforderlichen hohen Kräfte können selbst bei hoher Werkstücksteifigkeit vergleichsweise große elastische Verformungen des Werkstücks auftreten. Insbesondere bei Werkstoffverbund-Bauteilen kann durch diese Verformungen der Werkstoffverbund beeinträchtigt werden.

Der Erfindung liegt die Aufgabe zugrunde, ein Werkstoffverbund-Bauteil mit einer Bruchtrennfläche sowie ein Verfahren zur Vorbereitung einer Bruchtrennstelle in einem Werkstoffverbund-Bauteil zu schaffen, bei welchem der Werkstoffverbund in geringerem Maße durch den Bruchvorgang beeinträchtigt wird.

Diese Aufgabe wird erfindungsgemäß gelöst durch ein Verfahren zur Vorbereitung einer Bruchtrennstelle in einem Werkstoffverbundbauteil, bestehend aus einer ersten Werkstoffzone und einer benachbarten zweiten Werkstoffzone, die miteinander im wesentlichen ohne Änderung der Gefügeeigenschaften verhaftet sind, bei welchem in einem für eine Rißinitiierung vorgesehenen Bereich lokal eine spröde Zone gebildet wird indem mittels eines auf den genannten Bereich gerichteten energiereichen Strahles durch den Werkstoff einer ersten Werkstoffzone und den Werkstoff einer benachbarten zweiten Zone lokal eine Werkstoffdiffusion veranlaßt wird.

Dadurch wird es auf vorteilhafte Weise möglich, einen Bruchtrennvorgang auf zuverlässige Weise und unter vergleichsweise geringen Bruchkräften in einem Werkstoffverbundbauteil herbeizuführen, wobei bereits nahe der Bruchtrennstelle vergleichsweise große elastische Verformungen zulässig sind. In besonders vorteilhafter Weise wird es hierbei möglich, eine sichere Rißeinleitung sowie eine der Belastungsrichtung entsprechende Rißausbreitung zu gewährleisten. Die Erfindung eignet sich in besonderem Maße für die Herstellung bleifreier Gleitlageranordnungen für Brennkraftmaschinen.

Gemäß einer besonders bevorzugten Ausführungsform des erfindungsgemäßen Verfahrens wird als energiereicher Strahl ein Laserstrahl verwendet. Alternativ hierzu oder auch in Kombination hiermit ist es möglich, als energiereichen Strahl einen Elektronenstrahl zu verwenden. Hierbei kann die Diffusionszone mit hoher Positionsgenauigkeit in dem Werkstück ausgebildet werden.

Der energiereiche, vorzugsweise stark fokussierte Strahl kann über ein Strahlführungssystem derart über die zur Rißinitiierung vorgesehene Zone geführt werden, daß dieser die Rißinitiierungszone zumindest einmal überstreicht.

Es ist möglich, den energiereichen Strahl, vorzugsweise den Laserstrahl pulsweise auf das Werkstück abzugeben, zur Erzeugung einer Vielzahl entlang des für die Rißinitiierung vorgesehenen Bereiches abfolgend angeordneter Diffusionspunkte. Alternativ hierzu oder insbesondere bei mehrfachem Überstreichen der zur Rißinitiierung vorgesehenen Zone ist es auch möglich, den energiereichen Strahl bei einer vorgegebenen Vorschubgeschwindigkeit kontinuierlich auf das Werkstück abzugeben. Der Energieeintrag kann in Abhängigkeit von der Auftreffposition des energiereichen Strahles gesteuert werden. Bei einem gepulsten Betrieb ist es möglich, den Energieeintrag durch die Pulsfrequenz und die Vorschubgeschwindigkeit zu steuern. Es ist auch möglich, eine Intensitätsund/oder Fokussierungsregelung vorzunehmen.

Der Laserstrahl kann bahngesteuert über die zur Rißinitiierung vorgesehene Zone bewegt werden. Insbesondere bei einer pulsweisen Aufstrahlung des energiereichen Strahles ist es auch möglich, die Aufstrahlung derart vorzunehmen, daß ein vorgegebenes Temperaturprofil in der zur Rißinitiierung vorgesehenen Zone erreicht wird. Dies kann bei einem über eine Spiegeloptik geführten Laserstrahl beispielsweise erreicht werden, indem die einzelnen Laserpunkte derart auf einen Trennpfad abgestrahlt werden, daß zwischen den zurückliegenden drei Laserpunkten jeweils der größtmögliche Abstand herrscht. Bei dieser Ausführungsform nimmt die Punktedichte allmählich zu, bis entlang der zur Rißinitiierung vorgesehenen Zone eine lückenfreie Laserpunkte-Kette vorliegt.

Es ist möglich, den Energieeintrag, die Fokussierung sowie die Intensität des energiereichen Strahls derart abzustimmen, daß zumindest in der durch den Strahl zuerst getroffenen Werkstoffzone sacklochartige Bohrungen entstehen. Die Bohrungen können zur Bauteilsoberfläche hin konisch erweitert ausgebildet werden. Der Abstand dieser sacklochartigen Bohrungen kann mit Vorteil derart festgelegt werden, daß sich die Bohrungen in ihrem Anfangsbereich stark annähern oder ggf. überlagern.

Gemäß einer besonders bevorzugten Ausführungsform der Erfindung wird die zweite Werkstoffzone aus einem auf Aluminium basierenden Werkstoff gebildet. Hierdurch wird es möglich, durch Diffusion von Al-Atomen in den benachbarten Bereich des Bauteils, lokal eine spröde Mischphase auszubilden. In vorteilhafter Weise wird es hierbei möglich, in dem Sollbruchbereich die Belastbarkeit des Werkstoffverbundes zu erhöhen. Insbesondere bei der Ausbildung der zweiten Werkstoffzone als Gleitlagerfläche wird auf vorteilhafte Weise sichergestellt, daß die Bruchfläche im wesentlichen versatzfrei die benachbarten Werkstoffzonen durchläuft.

Insbesondere bei der auf den Rißbereich beschränkten Ausbildung einer lokalen Diffusionszone mit Al-Atomen ist es in vorteilhafter Weise möglich, die erste Werkstoffzone aus einem C-Stahl oder einer Ti-Legierung zu bilden. Die erste Werkstoffzone entspricht hierbei vorzugsweise dem Bauteil-Grundwerkstoff.

Die eingangs angegebene Aufgabe wird weiterhin gelöst durch ein Verbundwerkstoff-Bauteil welches eine erste Werkstoffzone und eine dieser benachbarte zweite Werkstoffzone die miteinander im wesentlichen ohne Änderung der Gefügeeigenschaften verhaftet sind, sowie eine durch Bruchtrennung gebildeten Bruchfläche aufweist, wobei die Bruchfläche sich zumindest abschnittsweise in einen Rißinitiierungsbereich hinein erstreckt, der in einer lokal ausgebildeten spröden Diffusionszone verläuft, wobei die spröde Diffusionszone gebildet ist, indem durch einen energiereichen Strahl eine lokale Diffusion des Werkstoffs der Werkstoffzonen ineinander veranlaßt ist.

Gemäß einer besonders bevorzugten Ausführungsform der Erfindung ist das Verbundwerkstoff-Bauteil ein Pleul oder ein von einem Pleulgrundkörper abgetrennter Pleuldeckel. Da bei dem erfindungsgemäßen Verbund-Bauteil vergleichsweise große elastische Verformungen zugelassen sind ist es insbesondere auch möglich, das Verbundbauteil als Lagerschale auszubilden.

Die zweite Werkstoffzone kann insbesondere hierbei aus einem Lagerwerkstoff beispielsweise einer Leichtmetall-Legierung gebildet sein. Die erste Werkstoffzone bildet in vorteilhafter Weise bereits den Lagerschalen- oder Pleulgrundkörper und ist aus einem auf einer Ti-Legierung basierenden Werkstoff, einem C-Stahl, oder einem Sinterwerkstoff, gebildet. Die zweite Werkstoffzone kann Legierungszusätze enthalten, welche die lokale Ausbildung einer spröden Materialzone unterstützen. Im Falle eines Lagerwerkstoffes mit einem Hauptanteil an Kupfer, Zinn oder Aluminium können vorzugsweise Beimengungen an Phosphor, Arsen oder Graphit vorgesehen werden. Hierdurch kann im Zusammenspiel mit einem Stahlwerkstoff eine lokale, spröde Martensitzone gebildet werden. Als besonders geeignet haben sich für die zweite Werkstoffzone CuAl7-10, CuSn8, CuSnP, SnSb7, CuAIFe, CuAIMn, CuAlSe, CuAIB, AlSn20 ggf. mit Beimengungen von O2, H2, N2 oder Bor, erwiesen. Beimengungen an Fe Mn und Si unterstützen die lokale Versprödung ebenfalls. Für die erste Werkstoffzone eignet sich insbesondere Stahl mit einem Kohlenstoffgehalt von ca. 0,7%.

Die erste Werkstoffzone ist vorzugsweise kalt mit der zweiten Werkstoffzone verhaftet. Diese Haftung kann durch einen elektrolytischen Vorgang oder vorzugsweise durch einen Preß- insbesondere Walzvorgang erreicht werden. Es ist möglich, in einem zwischen den beiden Zonen liegenden Bereich insbesondere an der, an die erste Werkstoffzone angrenzenden Fläche eines zur Bildung der zweiten Werkstoffzone vorgesehenen Bauteiles z.B Lagerbuchse, eine Haftvermittlungsschicht beispielsweise in Form einer Reinaluminiumschicht, vorzusehen. Der Verbund der beiden Werkstoffzonen kann insbesondere durch vorbereitende Bearbeitung der Oberflächen der aneinandergrenzenden Werkstückzonen, beeinflußt werden. Es ist möglich, hier definierte Oberflächenrauhigkeiten durch Schleif- , Strahl- und/oder Ätzbehandlungen vorzusehen.

Weitere vorteilhafte Einzelheiten der Erfindung ergeben sich aus der nachfolgenden Beschreibung in Verbindung mit der Zeichnung. Es zeigt:
**Fig. 1** eine vereinfachte Detailansicht eines Bauteiles mit einer Funktionsfläche - hier Gleitlagerschicht - und einem Bauteil-Grundmaterial, wobei in einem für eine Rißinitiierung vorgesehenen Bereich durch einen energiereichen Strahl lokal eine spröde Zone ausgebildet ist;
**Fig.2a** eine Seitenansicht eines Pleuls mit einem Kurbelzapfenlager, einer eingewalzten Gleitlagerbuchse und einem über Bruchtrennstellen vereinzelten Lagerdeckel;
**Fig.2b** einen Ausschnitt aus dem Kurbelzapfenlager nach Fig.2a;
**Fig.2c** eine Detaildarstellung zur Erläuterung des Gefügeaufbaues im Bereich der Bruchtrennstelle.

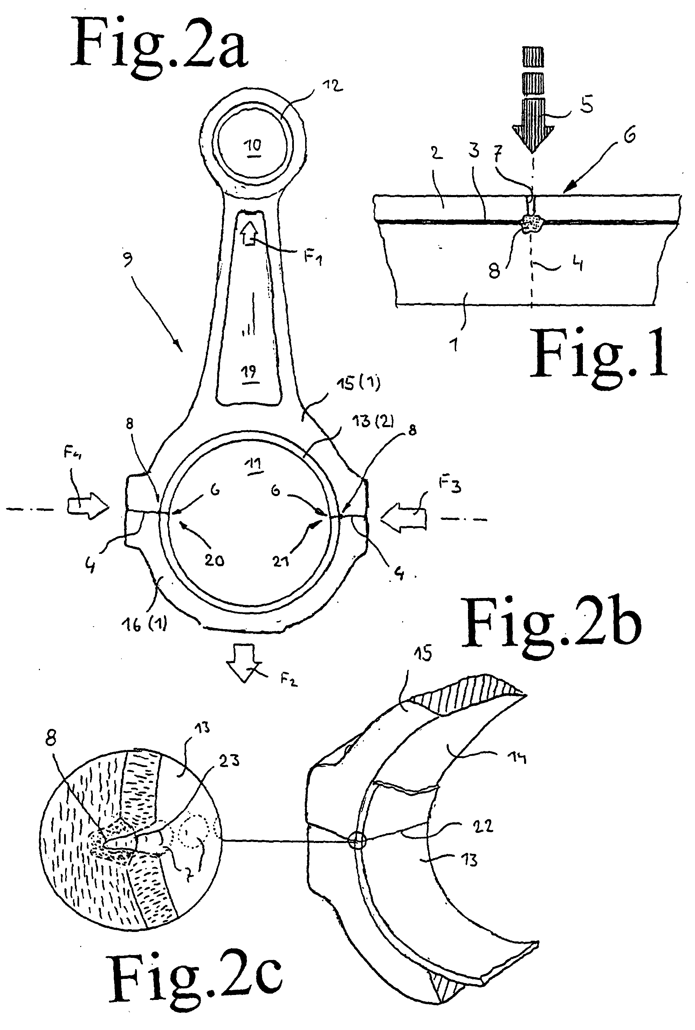

Das in Figur 1 abschnittsweise dargestellte Werkstoffverbund-Bauteil umfaßt eine erste Werkstoffzone 1 und eine zweite Werkstoffzone 2 die hier aus einem aluminiumhaltigen Lagerwerkstoff gebildet ist. Die beiden Werkstofflzonen 1,2 sind über eine Haftbrückenzone 3 miteinander verhaftet. Die Haftbrückenzone 3 ist bei dieser Ausführungsform durch einen Walzvorgang gebildet.

Zur Erhöhung der Verhaftung der beiden Werkstoffzonen 1, 2 miteinander ist im Rahmen eines vorbereitenden Verfahrensschrittes an einem die zweite Werkstoffzone 2 bildenden Materialabschnitt eine Reinaluminiumschicht aufgetragen. Diese Reinaluminiumschicht bildet unter dem Druck eines Walzvorganges mit der angrenzenden Oberfläche der ersten Werkstoffzone 1 eine Haftbrücke. Diese Haftbrücke koppelt die beiden Werkstoffzonen 1, 2 miteinander im wesentlichen ohne daß hierbei eine Änderung der Gefügeeigenschaften in den beiden Werkstoffzonen 1, 2 erfolgt. Die Ausbildung der Haftbrücke wird hierbei erreicht, indem die genannte Reinaluminiumschicht durch die angrenzende Oberfläche der ersten Werkstoffzone 1 "aufgerissen" wird und die beiden Werkstoffzonen hierbei eine mechanische und ggf. metallische Verbindung miteinander eingehen. Bei dem Werkstoff der ersten Werkstoffzone 1 handelt es sich im vorliegenden Ausführungsbeispiel um einen Stahlwerkstoff vorzugsweise mit einem Kohlenstoffgehalt im Bereich von 0,28% bis 0,80%.

Zur Ausbildung einer Bruchtrennfläche 4 in dem Werkstoffverbund-Bauteil ist über einen energiereichen Strahl 5 lokal eine Rißinitiierungszone 6 ausgebildet. Die Rißinitiierungszone 6 umfaßt hier neben sacklochartigen Vertiefungen 7 eine spröde Materialzone 8. Bei der hier gezeigten Ausführungsform ist die spröde Materialzone 8 durch eine AL/Fe-Mischphase gebildet, die im Rahmen der lokalen Aufheizung des Werkstoffverbund-Bauteiles entsteht.

Das räumliche Ausmaß der lokalen spröden Materialzone 8 ist durch den Energieeintrag über den energiereichen Strahl 5 bestimmt. Durch die sacklochartigen Vertiefungen 7 in Kombination mit der lokal versprödeten Materialzone 8 wird ein besonders günstiges Crackverhalten und eine zuverlässige Rißinitiierung und Ausbildung der Bruchfläche 4 erreicht.

In Fig.2a ist ein Pleul 9 für eine Hubkolbenmaschine, insbesondere Brennkraftmaschine dargestellt. Einzelheiten dieses Pleuls sind in den Figuren 2b und 2c dargestellt. Auf diese Detaildarstellungen wird im Rahmen der Erläuterungen zu Fig.2a Bezug genommen.

Das Pleul 9 ist sowohl im Bereich des Pleulauges 10 als auch im Bereich einer Kurbelzapfenbohrung 11 mit Gleitlagereinsätzen 12, 13, versehen. Der Gleitlagereinsatz 13 ist aus einem Lagerwerkstoff auf Al-Basis gefertigt und über eine Reinaluminiumschicht auf eine rauhe Innenumfangsfläche 14 (siehe Fig.2b) des Pleulgrundkörpers 15 aufgewalzt. Hierzu wird ein den Gleitlagereinsatz 13 bildendes Buchsenelement unter einer Übergangs- oder Preßpassung in die Kurbelzapfenbohrung 11 eingefügt und anschließend unter zentrischer Aufweitung mit mehreren Walzelementen mehrfach überwalzt. Das Überwalzen kann beispielsweise durch mehrere axial versetzt angeordnete und angestellte Rollen - oder auch durch Kugelelemente, erfolgen.

Das Grundmaterial des Pleuls 9 bildet die vorangehend in Verbindung mit Fig.1 beschriebene erste Werkstoffzone 1. Der im Bereich der Kurbelzapfenbohrung 11 eingewalzte Gleitlagereinsatz 13 entspricht der zweiten Werkstoffzone 2.

Das Pleul 9 umfaßt einen Lagerdeckel 16 der über Bruchtrennflächen 4 und (bei dem späteren Einbau in einer Brennkraftmaschine) über nicht näher dargestellte Spannschrauben mit einem Pleulschaft 19 gekoppelt ist. Die Bruchtrennflächen 4 sind durch einen Crackvorgang gebildet. Hierzu sind an diametral einander gegenüberliegenden Bereichen 20, 21 in der Kurbelzapfenbohrung 11 des Pleuls 9, Rißinitiierungszonen 6 ausgebildet. Diese Rißinitiierungszonen 6 umfassen jeweils einen spröden Materialabschnitt 8 der sich entlang in einer Axialebene der Kurbelzapfenbohrung 11 im Bereich einer Axiallinie 22 (Fig.2b) erstreckt.

Der spröde Materialabschnitt 8 ist hier durch lokale Diffusion des Werkstoffes des Gleitlagereinsatzes 13 in den Stahlwerkstoff des Pleulgrundkörpers erzeugt. Die Ausbildung ist hier derart getroffen, daß ein Sacklochspitzenbereich 23 von sacklochartigen, durch Laserkerben gebildeten Vertiefungen 7 bis in die spröde Materialzone 8 hineinragt. Der Abstand der sacklochartigen Vertiefungen 7 ist derart gewählt, daß sich diese im Bereich der Innenumfangsfläche des Gleitlagereinsatzes 13 nahezu überlagern.

Die Rißinitiierung zur Bildung der Bruchtrennflächen 4 im Bereich der lokal versprödeten Materialzonen 8 erfolgt durch Aufbringung von Kräftepaaren F₁/F₂; F₃;F₄ auf das Pleul 9, wobei diese Kräfte derart aufgebracht werden, daß unmittelbar im Bereich der lokal ausgebildeten, versprödeten Materialzonen 8 Zugspannungen entstehen die im wesentlichen normal zur nächstliegenden Axialebene der Kurbelzapfenbohrung 11 ausgerichtet sind.

Nach Abtrennung des Pleuldeckels 16 mit der anhaftenden Hälfte des Gleitlagereinsatzes 13 kann dieser über die beiden Bruchflächen 4 wieder an den Pleulgrundkörper 15 angesetzt werden. Der hierbei wieder vervollständigte Gleitlagereinsatz 13 kann abschließend nachbearbeitet werden. Hierbei wird es möglich, etwaige Unebenheiten im Bereich der Innenumfangsfläche des Gleitlagereinsatzes im Bereich der Rißinitiierungzone 6 zu beseitigen. Diese Nachbearbeitung kann neben Hon- oder Schleifbehandlungen auch nochmalige Walzbehandlungen einschließen.

Die Erfindung ist nicht auf die vorangehend beschriebenen Ausführungsbeispiele beschränkt. Neben der Herstellung von Lagerschalen sowie Pleulversionen mit einer als Bruchfläche ausgebildeten Pleuldeckelfügefläche eignet sich die Erfindung allgemein für Bauteile auf Grundlage eines Werkstoffverbundes bei welchen durch fokussierte Zufuhr von Energie ein lokaler Diffusionsvorgang unter Bildung einer spröden Mischzone hervorgerufen werden kann.

## Patentansprüche

1. Verfahren zur Vorbereitung einer Bruchtrennstelle in einem Werkstoffverbundbauteil, bestehend aus einer ersten Werkstoffzone und einer benachbarten zweiten Werkstoffzone, die miteinander im wesentlichen ohne Änderung der Gefügeeigenschaften verhaftet sind, bei welchem in einem für eine Rißinitiierung vorgesehenen Bereich lokal eine spröde Zone gebildet wird, indem mittels eines auf den genannten Bereich gerichteten energiereichen Strahles durch den Werkstoff der ersten Werkstoffzone und den Werkstoff der benachbarten zweiten Zone lokal eine Werkstoffdiffusion veranlaßt wird.

2. Verfahren nach Anspruch 1, **dadurch gekennzeichnet, daß** als energiereicher Strahl ein Elektronenstrahl verwendet wird.

3. Verfahren nach Anspruch 1, **dadurch gekennzeichnet, daß** als energiereicher Strahl ein Laserstrahl verwendet wird.

4. Verfahren nach wenigstens einem der Ansprüche 1 bis 3, **dadurch gekennzeichnet, daß** der energiereiche Strahl den für die Rißinitiierung relevanten Bereich überstreicht.

5. Verfahren nach wenigstens einem der Ansprüche 1 bis 4, **dadurch gekennzeichnet, daß** der Laserstrahl pulsierend abgegeben wird, zur Erzeugung einer Vielzahl entlang des für die Rißinitiierung vorgesehenen Bereiches abfolgend angeordneter Laserpunkte.

6. Verfahren nach wenigstens einem der Ansprüche 1 bis 5, **dadurch gekennzeichnet, daß** die Fokussierung des Laserstrahles sowie dessen Intensität derart abgestimmt werden, daß zumindest in einer der Werkstoffzonen sacklochartige Vertiefungen entstehen.

7. Verfahren nach wenigstens einem der Ansprüche 1 bis 6, **dadurch gekennzeichnet, daß** die erste Werkstoffzone aus einem C-Stahl oder einer Ti-Legierung gebildet ist.

8. Verfahren nach wenigstens einem der Ansprüche 1 bis 7, **dadurch gekennzeichnet, daß** die zweite Werkstoffzone aus einem auf Al basierenden Werkstoff gebildet wird.

9. Bauteil mit einer ersten Werkstoffzone (1) und einer dieser benachbarten zweiten Werkstoffzone (2), die miteinander im wesentlichen ohne Änderung der Gefügeeigenschaften verhaftet sind, und einer durch Bruchtrennung gebildeten Bruchfläche (4), **dadurch gekennzeichnet, daß** die Bruchfläche (4) zumindest abschnittsweise von einer Rißinitiierungszone (6) begrenzt ist, die in einer lokal ausgebildeten spröden Diffusionszone (8) verläuft, wobei die spröde Diffusionszone (8) gebildet ist, indem durch einen energiereichen Strahl (5) eine lokale Diffusion des Werkstoffs der zweiten Werkstoffzone (2) in den Werkstoff der ersten Werkstoffzone (1) veranlaßt ist.

10. Bauteil nach Anspruch 9, **dadurch gekennzeichnet, daß** dieses als Pleul (9) oder Pleuldeckel (16) ausgebildet ist

11. Bauteil nach Anspruch 9, **dadurch gekennzeichnet, daß** dieses als Lagerschale ausgebildet , ist.

12. Bauteil nach wenigstens einem der Ansprüche 9 bis 11, **dadurch gekennzeichnet, daß** die zweite Werkstoffzone (2) aus einem auf Al basierenden Werkstoff gebildet ist.

13. Bauteil nach wenigstens einem der Ansprüche 9 bis 12, **dadurch, gekennzeichnet, daß** die erste Werkstoffzone (1) aus einem auf einer Ti-Legierung basierenden Werkstoff oder aus einem C-Stahl gebildet ist.

14. Bauteil nach wenigstens einem der Ansprüche 9 bis 13, **dadurch gekennzeichnet, daß** die erste Werkstoffzone (1) durch einen Walzvorgang mit der zweiten Werkstoffzone (2) haftend verbunden ist.

15. Bauteil nach wenigstens einem der Ansprüche 9 bis 14, **dadurch gekennzeichnet, daß** die zweite Werkstoffzone (2) im Rahmen eines Abscheidevorganges oder auf elektrolytischem Wege auf der ersten Werkstoffzone (1) aufgebracht ist.

16. Bauteil nach wenigstens einem der Ansprüche 9 bis 15, **dadurch gekennzeichnet, daß** die zweite Werkstoffzone (2) eine Gleitlagerfläche bildet.

## Claims

1. A method of preparing a fracture parting surface in a composite-material component comprising a first zone of material and a neighbouring second zone of material joined together without substantial alteration of the structural properties, wherein a brittle zone is formed locally in an area provided for initiating a crack by producing local diffusion of material through the first zone and the neighbouring second zone by a high-energy beam directed on to the said area.

2. A method according to claim 1, **characterised in that** the high-energy beam is an electron beam.

3. A method according to claim 1, **characterised in that** the high-energy beam is a laser beam.

4. A method according to at least one of claims 1 to 3, **characterised in that** the high-energy beam sweeps over the area for crack initiation.

5. A method according to at least one of claims 1 to 4, **characterised in that** the laser beam is delivered in pulses for producing a number of successive spots along the area for crack initiation.

6. A method according to at least one of claims 1 to 5, **characterised in that** the focusing of the laser beam and the intensity thereof are adjusted so that blind bore-like recesses are formed in at least one of the zones of material.

7. A method according to at least one of claims 1 to 6, **characterised in that** the first zone consists of a C-steel or a Ti alloy.

8. A method according to at least one of claims 1 to 7, **characterised in that** the second zone consists of an Al-based material.

9. A component comprising a first zone of material (1) and a neighbouring second zone of material (2) joined together substantially without altering the structural properties, together with a fracture surface (4) formed by fracture parting, **characterised in that** the fracture surface (4) is at least partially bounded by a crack initiation zone (6) which extends in a locally-formed brittle diffusion zone (8), wherein the brittle diffusion zone (8) is formed by local diffusion of the material of the second zone (2) into the material of the first zone (1), caused by a high-energy beam (5).

10. A component according to claim 9, **characterised in that** it is a connecting rod (9) or connecting-rod cover (16).

11. A component according to claim 9, **characterised in that** it is a bearing shell.

12. A component according to at least one of claims 9 to 11, **characterised in that** the second zone (2) is of Al-based material.

13. A component according to at least one of claims 9 to 12, **characterised in that** the first zone (1) is of a Ti-alloy based material or of a C-steel.

14. A component according to at least one of claims 9 to 13, **characterised in that** the first zone (1) is stuck to the second zone (2) by a rolling process.

15. A component according to at least one of claims 9 to 14, **characterised in that** the second zone (2) is applied to the first zone (1) during a deposition process or electrolytically.

16. A component according to at least one of claims 9 to 15, **characterised in that** the second zone (2) is in the form of a friction-bearing surface.

## Revendications

1. Procédé pour préparer un point de rupture dans un élément en matériau composite, composé d'une première zone de matériau et d'une deuxième zone de matériau voisine, qui adhèrent l'une à l'autre sans variation de leurs propriétés de structure,
selon lequel
on forme localement une zone fragile dans une région prévue pour une amorce de fissuration, en provoquant localement une diffusion de matériau au moyen d'un faisceau énergétique dirigé sur cette région à travers le matériau de la première zone et le matériau de la deuxième zone voisine.

2. Procédé selon la revendication 1,
**caractérisé en ce que**
le faisceau énergétique utilisé est un faisceau d'électrons.

3. Procédé selon la revendication 1,
**caractérisé en ce que**
le faisceau énergétique utilisé est un faisceau laser.

4. Procédé selon au moins une des revendications 1 à 3,
**caractérisé en ce que**
le faisceau énergétique balaie la région choisie pour amorcer la fissuration.

5. Procédé selon au moins une des revendications 1 à 4,
**caractérisé en ce que**
le faisceau laser est pulsé, de façon à produire une pluralité de points laser disposés successivement le long de la région prévue pour amorcer la fissuration.

6. Procédé selon au moins une des revendications 1 à 5,
**caractérisé en ce que**
la focalisation du faisceau laser ainsi que son intensité sont adaptées l'une à l'autre de façon à former des empreintes en forme de trous borgnes au moins dans une des zones de matériau.

7. Procédé selon au moins une des revendications 1 à 6,
**caractérisé en ce que**
la première zone de matériau est constituée d'un acier au carbone ou d'un alliage de titane.

8. Procédé selon au moins une des revendications 1 à 7,
**caractérisé en ce que**
la deuxième zone de matériau est constituée d'un matériau à base d'aluminium.

9. Elément comportant une première zone de matériau (1) et une deuxième zone de matériau voisine (2), qui adhèrent l'une à l'autre sans variation des propriétés de structure, et une surface de rupture (4) formée par une rupture,
**caractérisé en ce que**
la surface de rupture (4) est délimitée au moins en partie par une zone d'amorce de fissuration (6), qui est située dans une zone de diffusion fragile locale (8), la zone de diffusion fragile (8) étant formée en provoquant une diffusion locale du matériau de la deuxième zone (2) dans le matériau de la première zone (1) au moyen d'un faisceau énergétique (5).

10. Elément selon la revendication 9,
**caractérisé en ce que**
celui-ci est une bielle (9) ou un chapeau de bielle (16).

11. Elément selon la revendication 9,
**caractérisé en ce que**
celui-ci est constitué par une coquille de coussinet.

12. Elément selon au moins une des revendications 9 à 11,
**caractérisé en ce que**
la deuxième zone de matériau (2) est constituée d'un matériau à base d'aluminium.

13. Elément selon au moins une des revendications 9 à 12,
**caractérisé en ce que**
la première zone de matériau (1) est constituée d'un acier au carbone ou d'un matériau à base d'un alliage de titane.

14. Elément selon au moins une des revendications 9 à 13,
**caractérisé en ce que**
la première zone de matériau (1) est assemblée de manière adhérente à la deuxième zone de matériau (2) par une opération de laminage.

15. Elément selon au moins une des revendications 9 à 14,
**caractérisé en ce que**
la deuxième zone de matériau (2) est déposée sur la première zone de matériau (1) dans le cadre d'une opération de dépôt ou par voie électrolytique.

16. Elément selon au moins une des revendications 9 à 15,
**caractérisé en ce que**
la deuxième zone de matériau (2) forme une surface de palier lisse.
